# EUROPEAN PATENT SPECIFICATION

(11) **EP 2 182 101 B1**
(45) Date of publication and mention of the grant of the patent: **07.05.2014**
(21) Application number: 09174569.5
(22) Date of filing: 30.10.2009
(51) Int. Cl.: D02G 3/04, D02G 3/44, B60C 9/00, D02G 3/18

(54) **Technical yarn, in particular for protective clothing**
Technisches Garn, insbesondere für Schutzbekleidung
Fil technique, en particulier pour des vêtements de protection

(30) Priority: 04.11.2008 IT BS20080198
(43) Date of publication of application: 05.05.2010
(73) Proprietor: Filtes International S.r.l., 25031 Capriolo (BS) (IT)
(72) Inventor: Carrara, Sergio, 24067 Sarnico, BERGAMO (IT)
(74) Representative: Pulieri, Gianluca Antonio

(56) References cited:
- WO-A1-2006/114238
- GB-A- 893 158
- US-A- 3 914 499
- US-A1- 2005 091 961
- US-B1- 6 287 498

## Description

The present invention relates to a technical yarn, in particular for protective clothing, such as gloves and the like.

Over recent years the technical yarns sector has developed considerably, at the same rate as the growing interest in providing workers with suitable clothing for dangerous tasks.

One of the main efforts has been to produce yarns able to make comfortable clothing, so that such garments may be worn uninterruptedly during the working day without the worker being constantly tempted to remove them.

The purpose of the present invention is to produce a yarn which a protective garment, in particular gloves, can be made from and which is particularly comfortable.

Such purpose is achieved by a yarn made according to claim 1 below. The dependent claims describe embodiment variations.

The characteristics and advantages of the yarn according to the present invention will be evident from the description below, made by way of a non-limiting example.

A yarn according to the present invention comprises a first fibre sliver, for example discontinuous, for example made from polyethylene, in particular, high density polyethylene; for example, the first sliver is of the type sold under the marketing name of Dyneema® by DSM Dyneema B.V.

The yarn also comprises a second fibre sliver, for example discontinuous, blended with the first sliver, preferably in a drawing frame, composed of the combination of polymer fibres with a further elastomeric polymer.

For example the polymer fibres are polyamide fibres.

According to one embodiment, the elastomeric polymer comprises synthetic polymers, for example silicone.

According to one embodiment variation, the elastomeric polymer, in the form of fibre, is combined with the polymer fibre by twisting or winding.

According to a further embodiment variation, the polymer fibre is coated with the elastomeric polymer.

For example, the polymer fibres of the second sliver, for example the polyamide fibres, prior to blending of the first sliver with the second sliver, pass through a bath of a liquid substance corresponding to the elastomeric polymer, preferably in a liquid phase at room temperature, such as a siliconate bath, to obtain a second intermediate sliver. The second sliver is subjected to gradual, controlled drying to eliminate the excess water and obtain the final second sliver, destined for blending with the first sliver.

As a result, preferably, the polymer fibres are soaked in a continuous coating of elastomeric polymer, deriving from the drying of the liquid elastomeric polymer.

The sliver obtained by blending the first and second slivers is processed, for instance in a spinning machine, to obtain the yarn.

A fabric, according to the present invention, is made by weaving the yarn.

A protective garment according to the present invention, in particular for a glove, is made using said fabric, that is by weaving the yarn.

Innovatively, the protective garments made with the yarn described have high levels of mechanical resistance to cutting and abrasion while at the same time being very soft to the touch.

It is believed that the extreme comfort of the garments is due to the effect of the elastomer, which makes the contact of the yarn with the skin soft.

It is clear that a person skilled in the art, may make variations and modifications to the yarn described above so as to satisfy contingent requirements while remaining within the sphere of protection defined by the following claims.

## Claims

1. Yarn for protective clothing comprising:
- a first sliver comprising discontinuous polymer fibres;
- a second sliver of discontinuous fibres, mixed with the first sliver, comprising a combination of polymer fibres and an elastomeric polymer.

2. Yarn according to claim 1, wherein the first sliver is made from high-density polyethylene fibres.

3. Yarn according to claim 1 or 2, wherein the polymer fibres of the second sliver are polyamide fibres.

4. Yarn according to any of the previous claims, wherein the elastomeric polymer is synthetic.

5. Yarn according to claim 4, wherein the elastomeric polymer is a silicone or made by drying a siliconate.

6. Yarn according to any of the previous claims, wherein the polymer fibres are soaked in a continuous coating of elastomeric polymer made by drying the liquid elastomeric polymer.

7. Fabric comprising a yarn made according to any of the previous claims.

8. Protective clothing, for example, a glove, made in a yarn according to any of the claims from 1 to 6 or comprising a fabric according to claim 7.

9. Method of producing a yarn comprising the steps of:
- providing a first sliver comprising discontinuous polymer fibres;
- providing a second sliver of discontinuous fibres, according to the following sub-stages:
a) providing polymer fibres;
b) providing a liquid bath of an elastomeric polymer;
c) making the polymer fibres pass through the liquid bath, obtaining a second intermediate sliver;
d) drying the second intermediate sliver to obtain the final second sliver;
- blending the first and second sliver.

## Patentansprüche

1. Garn für Schutzkleidung, umfassend:
- ein erstes Band bzw. Faserband, das diskontinuierliche Polymerfasern bzw. Polymerspinnfasern umfasst;
- ein zweites Band bzw. Faserband aus diskontinuierlichen Fasern bzw. Spinnfasern, gemischt mit dem ersten Band, umfassend eine Kombination aus Polymerfasern und einem Elastomerpolymer.

2. Garn nach Anspruch 1, wobei das erste Band aus hochdichten Polyethylenfasern besteht.

3. Garn nach Anspruch 1 oder 2, wobei die Polymerfasern des zweiten Bands Polyamidfasern sind.

4. Garn nach einem der vorhergehenden Ansprüche, wobei das Elastomerpolymer synthetisch ist.

5. Garn nach Anspruch 4, wobei das Elastomerpolymer ein Silikon ist oder durch Trocknen eines Siliconats hergestellt wird.

6. Garn nach einem der vorhergehenden Ansprüche, wobei die Polymerfasern in einer kontinuierlichen Beschichtung bzw. Schicht aus Elastomerpolymer eingeweicht bzw. mit dieser getränkt werden, die durch Trocknen des flüssigen Elastomerpolymers hergestellt wird.

7. Stoff bzw. Gewebe, umfassend ein Garn nach einem der vorhergehenden Ansprüche.

8. Schutzkleidung, beispielsweise ein Handschuh, hergestellt aus einem Garn nach einem der Ansprüche 1 bis 6, oder umfassend einen Stoff bzw. Gewebe nach Anspruch 7.

9. Verfahren zum Herstellen eines Garns, umfassend die Schritte:
- Bereitstellen eines ersten Bands bzw. Faserbands, das diskontinuierliche Polymerfasern bzw. Polymerspinnfasern umfasst;
- Bereitstellen eines zweiten Bands bzw. Faserbands aus diskontinuierlichen Fasern bzw. Spinnfasern gemäß den folgenden Unterschritten:
a) Bereitstellen von Polymerfasern;
b) Bereitstellen eines Flüssigkeitsbads eines Elastomerpolymers,
c) Veranlassen, dass die Polymerfasern durch das Flüssigkeitsbad laufen, wobei ein zweites Zwischenband bzw. -faserband erhalten wird;
d) Trocknen des zweiten Zwischenbands, um das endgültige zweite Band zu erhalten;
- Mischen des ersten und zweiten Bands.

## Revendications

1. Fil pour vêtement de protection comprenant:
- une première ruban de fibres comprenant des fibres polymères discontinues;
- une seconde ruban de fibres discontinues, mélangée à la première ruban de fibres, comprenant une combinaison de fibres polymères et un polymère élastomère.

2. Fil selon la revendication 1, dans lequel la première ruban de fibres est constituée de fibres de polyéthylène haute-densité.

3. Fil selon la revendication 1 ou 2, dans lequel les fibres polymères de la seconde ruban de fibres sont des fibres de polyamide.

4. Fil selon l'une quelconque des revendications précédentes, dans lequel le polymère élastomère est synthétique.

5. Fil selon la revendication 4, dans lequel le polymère élastomère est une silicone ou est fabriqué par le séchage d'un siliconate.

6. Fil selon l'une quelconque des revendications précédentes, dans lequel les fibres polymères sont trempées dans un enrobage continu de polymère élastomère fabriqué par le séchage du polymère élastomère liquide.

7. Tissu comprenant un fil fabriqué selon l'une quelconque des revendications précédentes.

8. Vêtement de protection, par exemple un gant, produit en un fil selon l'une quelconque des revendications 1 à 6 ou comprenant un tissu selon la revendication 7.

9. Procédé de production d'un fil comprenant les étapes consistant à:
- utiliser une première ruban de fibres comprenant des fibres polymères discontinues;
- utiliser une seconde ruban de fibres discontinues, selon les sous-étapes suivantes consistant à:
a) utiliser des fibres polymères;
b) utiliser un bain liquide d'un polymère élastomère;
c) faire passer les fibres polymères à travers le bain liquide pour obtenir une seconde ruban de fibres intermédiaire;
d) faire sécher la seconde ruban de fibres intermédiaire afin d'obtenir la seconde ruban de fibres finale;
- mélanger la première et la seconde ruban de fibres.
